# EUROPÄISCHE PATENTSCHRIFT

(11) **EP 2 199 548 B1**
(45) Veröffentlichungstag und Bekanntmachung des Hinweises auf die Patenterteilung: **02.02.2011**
(21) Anmeldenummer: 08021879.5
(22) Anmeldetag: 17.12.2008
(51) Int. Cl.: F01L 1/344, F16F 1/02

(54) **Einrichtung zum Rückstellen eines Phasenverstellers für eine Nockenwelle**
Device for resetting a phase adjuster for a cam shaft
Dispositif de rappel d'un déphaseur pour un arbre à came

(43) Veröffentlichungstag der Anmeldung: 23.06.2010
(73) Patentinhaber: Feintool Intellectual Property AG, 3250 Lyss (CH)
(72) Erfinder: Locher, Arthur, Dipl.-Ing., 6644 Orselina (CH); Hora, Pavel, Prof. Dr., 5507 Mellingen (CH)
(74) Vertreter: Hannig, Wolf-Dieter

(56) Entgegenhaltungen:
- EP-A- 1 865 158
- DE-A1- 19 849 959
- DE-T2-602005 001 122
- JP-A- 2002 295 209
- US-A- 4 423 296
- US-B1- 6 276 321

## Beschreibung

Die Erfindung betrifft eine Einrichtung zum Rückstellen eines Phasenverstellers einer Nockenwelle, mit einem auf das freie Ende einer Nockenwelle aufgeschobenen Phasenversteller, in dessen mit einer Öffnung versehener Gehäuseboden ein am Gehäuseboden befestigter zur Nockenwelle drehfester Deckel einliegt, und mit einer zwischen Nockenwelle und Deckel wirkenden Feder zur Erzeugung eines Rückstellmoments.

### Stand der Technik

Die in bekannten Phasenverstellern wie sie in der beispielsweise in der DE 10 2006 009 192 A1, DE 10 2004 061 710 A1, DE 10 2007 019 920 A1, DE 60 2005 001 122 T2 beschrieben sind, verwenden durchweg Spiralfedern oder Druckfedern für die Erzeugung von Rückstellmomenten.

Aus der DE 10 2006 009 192 A1 ist eine Verstelleinrichtung für eine Brennkraftmaschine mit einem einen Stellbereich aufweisenden Stellmittel zum Verstellen der Phasenlage zwischen einem Antriebsmittel und einem nicht drehfest mit dem Antriebsmittel verbundenen Antriebsmittel und mit einem System, das dazu vorgesehen ist, in einem Notlaufmodus und/oder beim Abstellen der Brennkraftmaschine die Verstelleinrichtung zu verriegeln und für einen Normalbetrieb der Brennkraftmaschine die Verstelleinrichtung zu entriegeln. Das in diesem bekannten Stand der Technik offenbarte Schaltelement besteht aus einem Federelement, das zwei stabile Endlagen einnehmen kann, nämlich eine Entriegelungsposition und eine Verriegelungsposition.

Die DE 10 2006 061 710 A1 beschreibt eine Nockenwellenverstelleinrichtung mit einem hydraulischen Stellmittel sowie einem Verriegelungselement zur Verriegelung eines nockenwellenfesten Bauteils mit einem kurbelwellenfesten Bauteil und einem mittels eines Elektromagneten betätigbaren Hydraulikventils. Eine Rückstellfeder ist an dem Stellmittel vorgesehen, um das Verriegelungselement in seine Verriegelungsstellung einzufahren.

Bei der in der DE 10 2007 019 920 A1 offenbarten bekannten Lösung erfolgt die Verriegelung über einen Pin, der in einer Axialbohrung des Innenrotors aufgenommen ist. Der Pin wird durch die Federkraft einer Druckfeder in eine der in der Seitenwand in Form einer axialen Bohrung ausgebildeten Verriegelungsaufnahme gedrückt, so dass durch den in der Verriegelungsaufnahme greifenden Pin eine relative Drehverstellung zwischen Innen- und Außenrotor verhindert wird. Die Verriegelung wird aufgehoben, wenn durch die Druckbeaufschlagung des Druckraums die Druckfeder entgegen der Federkraft der Druckfeder den Pin aus seiner Verriegelungsaufnahme drückt.

Ferner ist aus der DE 60 2005 001 122 T2 ein Bolzenverriegelungsmechanismus bekannt, der eine Rückstellfeder umfasst, um ein Ende des Bolzens in einem gehärteten Sitz zu spannen, der in der Riemenscheibe oder im Kettenrad des Phasenversteller angeordnet ist, wodurch der Rotor in Bezug auf den Stator verriegelt ist. Rotor und Stator werden entgegen der Stellkraft einer Rückstellfeder entriegelt.

All diesen Lösungen ist der Nachteil gemeinsam, das als Rückstellfedern Spiralfedern eingesetzt werden, die eine verhältnismäßig große Einbauhöhe erfordern, materialintensiv sind und durch die erheblichen Lastwechsel zwischen Verriegelung und Entriegelung häufig ermüden, was zu einer kurzen Lebensdauer und großer Reparaturanfälligkeit der Phasenversteller führen kann. Des Weiteren ist die Montage der Spiralfedern oftmals aufwändig und kompliziert.

### Aufgabenstellung

Bei diesem Stand der Technik liegt der Erfindung die Aufgabe zugrunde, ein Federelement für die Rückstellung eines Phasenverstellers zu entwickeln, das zu einer geringeren Bauhöhe führt, weniger Material erfordert, einfacher zu montieren ist und zugleich eine deutliche Steigerung der Lebensdauer erlaubt.

Diese Aufgabe wird durch eine Einrichtung der eingangs genannten Gattung mit den Merkmalen des Anspruchs 1 gelöst.

Vorteilhafte Ausgestaltungen der erfindungsgemäßen Einrichtung sind den Unteransprüchen entnehmbar

Die erfindungsgemäße Lösung geht von der Erkenntnis aus, dass die Anbindung der beiden Verankerungspunkte des Federelementes in der Ebene des scheibenförmigen Deckels zu einer erheblichen Reduzierung der Bauhöhe der Feder führt und ein maximales Rückstellmoment und eine maximale Zugspannung im entferntesten Querschnitt zur Stelle der Krafteinleitung bei Omega-Federn bei gleichmäßiger Lastbeanspruchung erreicht wird.

Mit besonderem Vorteil einer gegenüber den als Drehfedern wirkenden Spiralfedern weitaus höheren Lebensdauer ist deshalb vorgesehen, dass ein symmetrisch zur Nockenwelle angeordnetes Omega-Federpaar mit einem zur Nockenwelle fest liegenden Deckel kraftschlüssig verbunden ist. Jede Omega-Einzelfeder hat einen inneren in der Nockenwelle festgelegten Verankerungspunkt und einen nahe am äußeren Umfang der Scheibe festgelegten Verankerungspunkt, wobei sich der Bereich mit dem maximalen Rückstellmoment und der maximalen Zugspannung beider Federn diametral gegenüberliegen, so dass eine gleichmäßige Belastung der Federn entsteht. Durch den Einsatz von zwei symmetrisch zueinander angeordneten Omega-Federn anstelle von nur einer Spiralfeder wird erreicht, dass sich die Last pro Bauteil reduziert, eine innere Verwindung der Feder vermieden und sich die Bauhöhe erheblich verringert. die Last geteilt,

Der Deckel weist eine zentrisch angeordnete Öffnung mit diametral gegenüberliegenden radialen Ausnehmungen auf, in denen sich der Verankerungspunkt der Feder mit Drehung der Nockenwelle bewegen kann, wobei sich die Feder gegen den äußeren Verankerungspunkt spannt und ein entsprechendes Rückstellmoment erzeugt.

Die kraftschlüssige Verankerung der Omega-Federn mit der Nockenwelle ist einfach herzustellen. Dazu hat die Omega-Feder einen lang ausgebildetes, aus der Ebene des scheibenförmigen Deckels abgebogenes Ende, das in einer in das freie Ende der Nockenwelle eingebrachten Sackbohrung einliegt. Die Sackbohrung in der Nockenwelle und die Ausnehmung in der Scheibe haben von der Drehachse der Nockenwelle denselben Radius, so dass die Ausnehmung den Zugang zur Sackbohrung ermöglicht und das lange Ende der Omega-Feder in die Sackbohrung kraftschlüssig einsteckbar ist.
Das kurze Ende der Omega-Feder ist ebenso in Richtung Deckel abgebogen und in eine nahe des äußeren Umfangs des Deckels eingebrachten Öffnung eingeschoben.

Besonders vorteilhaft ist, dass die Omega-Federn eine solche Formgebung aufweisen, dass sich an das lange abgewinkelte Ende ein etwa in radialer Richtung der Ausnehmung ohne scharfe Biegung abgebogener Abschnitt der Feder anschließt, der die durch die Drehung der Nockenwelle erzeugten Kräfte in Richtung der Drahtachse einleitet, wodurch Spannungsspitzen vermieden werden.

Es ist auch von Vorteil, dass Omega-Federn eines Federpaares untereinander baugleich sind, wodurch eine hocheffektive und wirtschaftliche Fertigung in großen Stückzahlen möglich wird.

Die erfindungsgemäßen Omega-Federn können vorzugsweise aus Runddrahtfederstahl oder Federstahl anderer Profilquerschnitte, wie beispielsweise rundkantiges Viereck aber auch U-Profilen mit konstanter oder variabler Dicke hergestellt werden. Außerdem können diese Materialien auch im vorgespannten Zustand zum Einsatz gelangen.
Die Erfindung führt im Vergleich zu den bisher üblichen Spiralfedern zu erheblichen Einsparungen an Draht und ist einfach und automatisch zu montieren und wartungsfreundlich.

### Ausführungsbeispiel

Die Erfindung soll nachstehend an einem Ausführungsbeispielen näher erläutert werden.
Es zeigt

Fig. 1 eine Draufsicht der erfindungsgemäßen Einrichtung,

Fig. 2 eine Draufsicht des scheibenförmigen Deckels der erfindungsgemäßen Einrichtung,

Fig. 3 eine perspektivische Ansicht einer Omega-Einzelfeder mit schematischer Darstellung des Spannungsverlaufes entlang der Einzelfeder bei Belastung und

Fig. 4 einen Schnitt entlang der Linie A-A der Fig. 1.

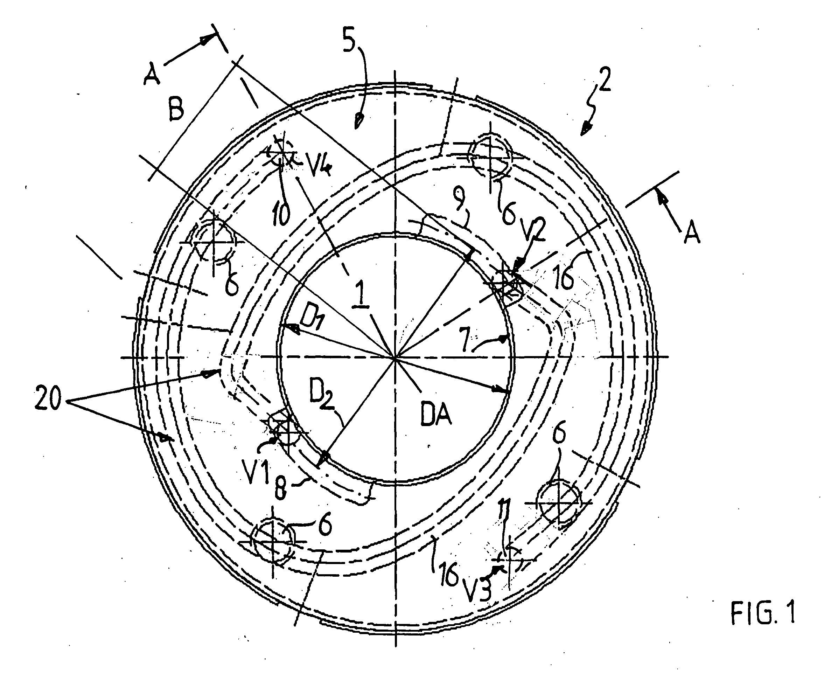

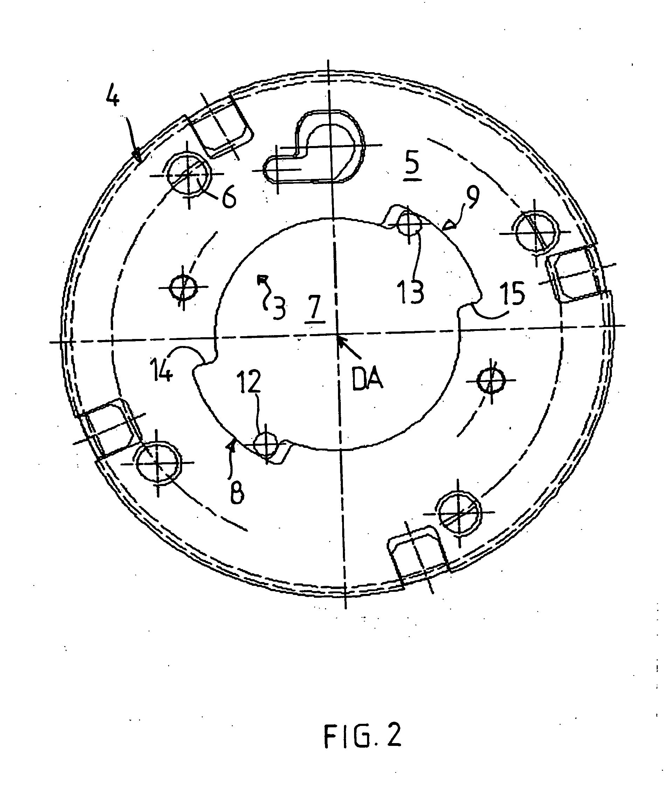

Die Fig. 1 zeigt die erfindungsgemäße Einrichtung im zusammengebauten Zustand.
Ein Phasenversteller 2 ist auf dem freien Ende der Nockenwelle 1 aufgeschoben.
Auf dem mit einer zentrischen Öffnung 3 versehenen Gehäuseboden 4 des Phasenverstellers 2 liegt der in Fig. 2 gezeigte scheibenförmige Deckel 5 auf, der mittels Schrauben 6 am Gehäuseboden 4 des Gehäuses des Phasenverstellers 2 befestigt ist. Der scheibenförmige Deckel 5 besitzt eine zentrische Öffnung 7, die sich oberhalb in Flucht der Öffnung des Gehäusebodens 4 befindet. Durch die Öffnung 3 im Gehäuseboden 4 bis nahe an die Öffnung 7 im scheibenförmigen Deckel 5 des Phasenverstellers 2 ragt das freie Ende der Nockenwelle 1. Die Öffnung 7 im scheibenförmigen Deckel 5 weist zwei nach außen gerichtete Ausnehmungen 8 und 9 auf, die diametral zur Drehachse DA der Nockenwelle 1 gegenüberliegend angeordnet sind und die auf einem Durchmesser D2 liegen, der gegenüber dem Durchmesser D1 der Öffnung 7 etwas größer ist, so dass die Öffnung 7 im Bereich der Ausnehmungen 8 und 9 eine flügelartige Kontur besitzt. Nahe am äußeren Umfang des scheibenförmigen Deckels 5 befinden sich zwei kleinere Öffnungen 10 und 11, die diametral zur Drehachse DA gegenüberliegend angeordnet sind.

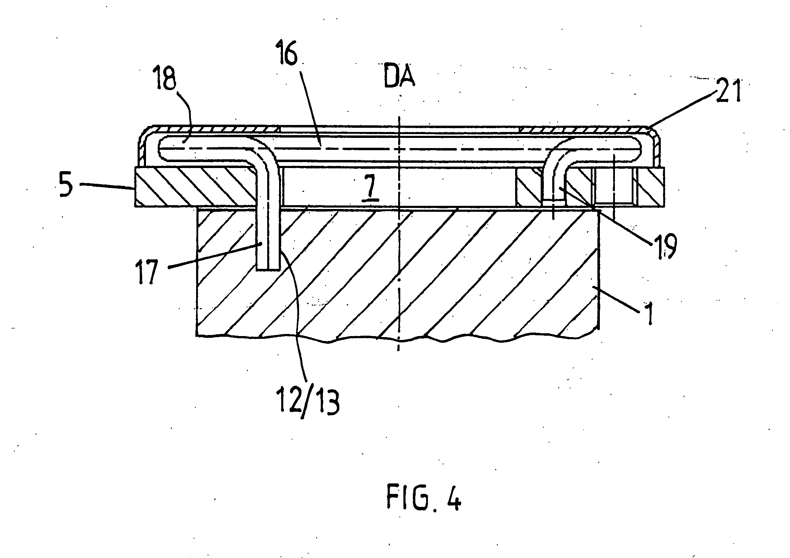

Im Bereich der flügelartigen Ausnehmungen 8 und 9, d.h. im Abstand B zur Drehachse DA, welcher auf dem Durchmesser D2 liegt, sind Sackbohrungen 12 und 13 in das freie Ende der Nockenwelle 1 koaxial zur Drehachse DA eingebracht (siehe Fig. 4). Die Sackbohrungen 12 und 13 liegen sich diametral gegenüber und sind den betreffenden Ausnehmungen 8 und 9 zugeordnet. Die Sackbohrung 12 befindet sich gemäß Fig. 1 in Nähe der linken Begrenzungswand 14 der Ausnehmung 8 und die Sackbohrung 13 in Nähe der rechten Begrenzungswand 15 der Ausnehmung 9. Die Sackbohrungen 12 und 13 bilden die Verankerungspunkte V1 und V2 für die kraftschlüssige Verbindung der später noch zu beschreibenden Omega-Einzelfedern 16 mit der Nockenwelle 1. Die kleineren Öffnungen 10 und 11 im Deckel 5 dienen als Verankerungspunkt V3 und V4 für die kraftschlüssige Verbindung zwischen dem scheibenförmigen Deckel 5 und den entsprechenden Omega-Einzelfedern 16.
Wie die Fig. 4 weiter zeigt, liegen die Omega-Einzelfedern 16 etwa auf der Ebene des scheibenförmigen Deckels 5. Durch einen Gehäusedeckel 21 ist das Gehäuse des Phasenverstellers 2 verschlossen. Dieser Gehäusedeckel 21 sichert zugleich die Einbaulage der Omega-Einzelfedern 16.

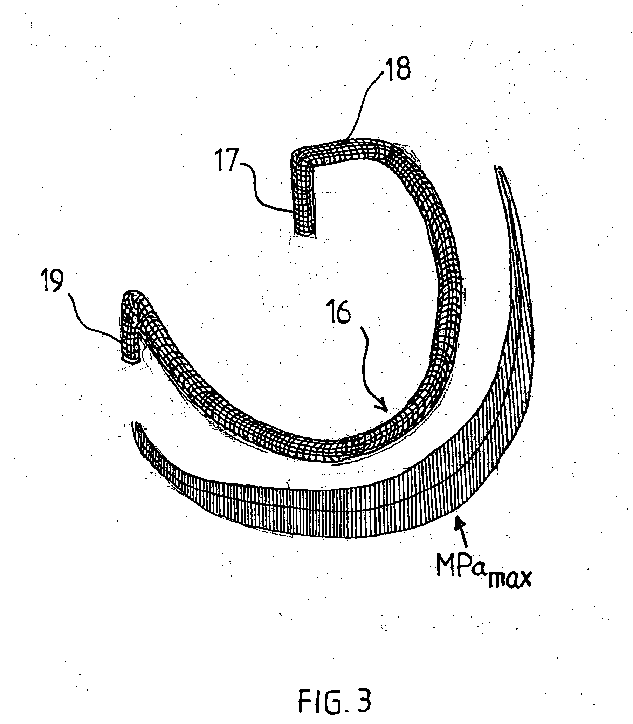

In Fig. 3 ist eine Omega-Einzelfeder 16 perspektivisch mit beispielhaft dargestelltem Verlauf der Zugspannungen gezeigt. Man erkennt, dass sich die maximale Zugspannung von z.B. bis zu 2000 MPa im entferntesten Querschnitt zur Stelle der Krafteinleitung, d.h. zu den Verankerungspunkten V1 und V3 befindet.
Die Omega-Einzelfedern 16 bestehen vorzugsweise aus Runddrahtfederstahl mit beispielsweise 2 mm Durchmesser, können aber auch andere Profilquerschnitte aufweisen, ohne die Erfindung zu verlassen.
Sie besitzen ein lang abgebogenes Ende 17, der in einen geradlinigen Abschnitt 18 übergeht, und ein kurz abgebogenes Ende 19. Zwei dieser Omega-Einzelfedern 16 bilden ein Omega-Federpaar 20, das zum Einbau in die erfindungsgemäße Einrichtung gelangt. Der Durchmesser der Omega-Einzelfedern 16 kann gleichbleibend oder variabel über die Länge der Federn sein.

Die Omega-Einzelfedern 16 des Omega-Federpaares 20 werden -wie Fig.1 zeigt- symmetrisch um die Drehachse DA der Nockenwelle 1 etwa in der Ebene des Deckels 5 sich teilweise gegenseitig umschließend angeordnet. Die Omega-Federn 16 werden dazu jeweils mit ihren langen, in Richtung des scheibenförmigen Deckels 5 abgebogenen Enden 17 in die jeweiligen Sackbohrungen 12 bzw. 13 der Nockenwelle 1 eingeschoben und der Verankerungspunkt V1 bzw. V2 ist durch die kraftschlüssige Verbindung zwischen dem langen Ende 17 der Omega-Einzelfeder 16 mit der Nockenwell 1 hergestellt( siehe Fig. 1). Die kurzen, ebenfalls in Richtung des scheibenförmigen Deckel 5 abgebogenen Enden 19 der Omega-Einzelfedern 16 werden in die nahe des äußeren Umfanges des scheibenförmigen Deckels 5 gelegenen Öffnungen 10 bzw.11 eingebracht und die kraftschlüssige Verbindung zwischen Omega-Einzelfeder 16 und dem scheibenförmigen Deckel 5 ist am Verankerungspunkt V3 bzw. V4 hergestellt.
Beide Omega-Einzelfedern 16 sind dann so zueinander ausgerichtet, dass sich bei Drehung der Nockenwelle 1 die Bereiche mit den maximalen Rückstellmomenten und der maximalen Zugspannung beider Federn diametral gegenüberliegen, wodurch eine gleichmäßige Belastung der Federn gewährleistet ist.

Nachfolgend wird der Spannvorgang, d.h. das Erzeugen des Rückstellmomentes mit der erfindungsgemäßen Einrichtung beschrieben.
Die Nockenwelle 1 dreht beispielsweise entgegen dem Uhrzeigersinn. Mit der Drehung der Nockenwelle 1 nehmen die Sackbohrungen 12 und 13 die langen Enden 17 der Omega-Einzelfeder 16 mit. Der innere scheibenförmige Deckel 5 liegt am Gehäuseboden 4 des Phasenverstellers 2 und damit auch die kurzen Enden 19 der Omega-Einzelfedern 16 an ihren 7 Verankerungspunkten V3 bzw. V4 fest, so dass sich die Omega-Einzelfedern 16 zwischen den Verankerungspunkten V1 und V3 bzw. V2 und V4 spannen und in Abhängigkeit der Drehbewegung der Nockenwelle das Rückstellmoment erzeugen, das ausreicht, um die nicht dargestellten Stellglieder des Phasenverstellers in ihre Ausgangsposition zu bringen. Dabei wird der Spannvorgang durch den sich am langen Ende 17 anschließenden geradlinigen Abschnitt 18 ohne Spannungsspitzen durch scharfe Biegungen im Federkörper bewerkstelligt, weil die durch das Drehmoment der Nockenwelle 1 erzeugten Kräfte in den Federkörper annähernd in Richtung Drahtachse FA eingebracht werden.
Die erfindungsgemäßen Omega-Federn zeichnen sich gegenüber den Spiralfedern des Standes der Technik durch eine doppelte maximale Zugspannung, eine wesentlich größere Wechselfestigkeit und eine signifikant längere Lebensdauer aus. Zugleich sind die Omega-Federn leicht austauschbar und montagefreundlich.

Bezugszeichenliste

**Hierzu gehören 4 Blatt Zeichnungen**

| | |
|---|---|
| Freies Ende der Nockenwelle | 1 |
| Phasenversteller | 2 |
| Öffnung in 4 | 3 |
| Gehäuseboden von 2 | 4 |
| Scheibenförmiger innerer Deckel | 5 |
| Schrauben | 6 |
| Zentrische Öffnung in 5 | 7 |
| Ausnehmungen an 5 | 8, 9 |
| Äußere Öffnungen | 10, 11 |
| Sackbohrungen | 12, 13 |
| Linke Begrenzungswand von 8 | 14 |
| Rechte Begrenzungswand von 9 | 15 |
| Omega-Einzelfeder | 16 |
| Langes abgebogenes Ende von 16 | 17 |
| Abschnitt von 16 | 18 |
| Kurzes abgebogenes Ende von 16 | 19 |
| Federpaar | 20 |
| Gehäusedeckel des Phasenverstellers 2 | 21 |
| Abstand Ausnehmung 8,9 zu DA | B |
| Drehachse von 1 | DA |
| Durchmesser der Öffnung 7 | D1 |
| Durchmesser auf dem die Ausnehmungen 7,8 | |
| liegen | D2 |
| Drahtachse | FA |
| Verankerungspunkte für 16 | V1,V2,V3, V4 |

## Patentansprüche

1. Einrichtung zum Rückstellen eines Phasenverstellers einer Nockenwelle, mit einem auf das freie Ende einer Nockenwelle (1) aufgeschobenen Phasenversteller (2), in dessen mit einer Öffnung (3) versehener Gehäuseboden (4) ein am Gehäuseboden (4) befestigter zur Nockenwelle drehfester Deckel (5) einliegt, und mit einer zwischen Nockenwelle und Deckel wirkenden Feder zur Erzeugung eines Rückstellmoments , **dadurch gekennzeichnet, dass** als Feder ein Omega-Federpaar (20) vorgesehen ist, dessen Einzelfedern (16) symmetrisch um die Drehachse (DA) der Nockenwelle (1) in der Ebene des Deckels (5) mit jeweils einem inneren, koaxial zur Drehachse (DA) der Nockenwelle (1) festgelegten Verankerungspunkt (V1,V2) und einem nahe am äußeren Umfanges des Deckels (5) festgelegten Verankerungspunkt (V3,V4) angeordnet sind, so dass jeweils ein maximales Rückstellmoment und eine maximale Zugspannung der beiden Einzelfedern (16) im entferntesten Querschnitt zwischen den inneren Verankerungspunkten (V1,V2) und den äußeren Verankerungspunkten (V3,V4) bei Drehung der Nockenwelle zum Rückstellen des Phasenverstellers anliegt.

2. Einrichtung nach Anspruch 1, **dadurch gekennzeichnet, dass** der Deckel (5) eine zentrisch angeordnete Öffnung (6) mit diametral gegenüberliegenden Ausnehmungen (7,8) zum Spannen der Omega-Einzelfedern (15) aufweist.

3. Einrichtung nach Anspruch 1 und 2, **dadurch gekennzeichnet, dass** die Omega-Einzelfedern (16) mit ihren lang ausgebildeten Enden (17) im Verankerungspunkt (V1,V2) an der Nockenwelle (1) und mit ihren anderen kurzen Enden (10) im Verankerungspunkt (V3,V4) des Deckels (5) angeordnet sind, wobei sich die Einzelfedern (16) teilweise umschließen.

4. Einrichtung nach Anspruch 3, **dadurch gekennzeichnet, dass** die Omega-Federn (16) so geformt sind, dass sich an das lange Ende (17) ein etwa in radialer Richtung der Ausnehmung (8,9) ohne scharfe Biegung abgebogener Abschnitt (18) anschließt, der die durch das Drehmoment der Nockenwelle (1) erzeugten Kräfte in Richtung Drahtachse (FA) in die Omega-Einzelfedern 16 einleitet.

5. Einrichtung nach Anspruch 1 bis 4, **dadurch gekennzeichnet, dass** die Omega-Einzelfedern (16) des Federpaares (20) untereinander baugleich sind.

6. Einrichtung nach Anspruch 1 bis 5, **dadurch gekennzeichnet, dass** die Omega-Einzelfedern (16) aus Federstahl mit runden Querschnitt oder Federstahldraht aus rundkantigem Viereck oder U-Profil bestehen.

7. Einrichtung nach Anspruch 6, **dadurch gekennzeichnet, dass** die Omega-Einzelfedern (16) einen konstanten oder variablen Durchmesser über ihre Länge aufweisen.

## Claims

1. Device for resetting a phase adjuster of a cam shaft with a slipped on the free end of a cam shaft (1) phase adjuster (2), in the provided with an opening (3) bottom of the casing (4) of which lies a fixed to the bottom of the casing (4) cap (5) torsion-proof with regard to the cam shaft, and with an acting between cam shaft and cap spring for producing a resetting moment, **characterized in that** as spring is provided a pair of omega springs (20), the single springs (16) of which are symmetrically arranged around the rotation axis (DA) of the cam shaft (1) in the plane of the cap (5) with respectively one inner with regard to the rotation axis (DA) of the cam shaft (1) coaxially fixed anchor point (V1, V2) and one anchor point (V3, V4) fixed near the outer circumference of the cap (5), so that respectively is produced a maximum resetting moment and a maximum tension of the two single springs (16) in the most distant section between the inner anchor points (V1, V2) and the outer anchor points (V3, V4) for resetting the phase adjuster when the cam shaft rotates.

2. Device according to claim 1, **characterized in that** the cap (5) has a centrically arranged opening (6) with diametrically opposed recesses (8, 9) for tensing the single omega springs (16).

3. Device according to claims 1 and 2, **characterized in that** the single omega springs (16) with their long developed ends (17) are positioned in the anchor points (V1, V2) at the cam shaft (1) and with their other short ends in the anchor points (V3, V4) of the cap (5), wherein the single springs (16) partly enclose each other.

4. Device according to claim 3, **characterized in that** the omega springs (16) are shaped in such a way that the long end (17) is followed by a bended portion (18) extending without a sharp bend approximately in the radial direction of the recess (8, 9), which leads the forces produced by the turning moment of the cam shaft (1) in the direction of the wire axis (FA) into the single omega springs (16).

5. Device according to claims 1 to 4, **characterized in that** the single omega springs (16) of the spring pair (20) are of identical construction.

6. Device according to claims 1 to 5, **characterized in that** the single omega springs (16) consist of spring steel with circular section or of round cornered spring steel wire with tetragonal section or channel section.

7. Device according to claim 6, **characterized in that** the single omega springs (16) over their length have a constant or a variable diameter.

## Revendications

1. Dispositif de rappel d'un déphaseur d'arbre à cames, comprenant un déphaseur (2) enfilé sur l'extrémité libre d'un arbre à cames (1), déphaseur dans le fond de carter (4) duquel est inséré un couvercle (5) fixé sur le fond de carter (4) et fixe en rotation par rapport à l'arbre à cames, le fond de carter (4) étant pourvu d'une ouverture (3), et comprenant un ressort agissant entre l'arbre à cames et le couvercle pour produire un moment de rappel, **caractérisé en ce que** l'on prévoit, en tant que ressort, une paire de ressorts en oméga (20) dont les ressorts individuels (16) sont placés de manière symétrique autour de l'axe de rotation (DA) de l'arbre à cames (1) dans le plan du couvercle (5) avec respectivement un point d'attache intérieur (V1, V2) fixé coaxialement par rapport à l'axe de rotation (DA) de l'arbre à cames (1) et un point d'attache (V3, V4) fixé près de la circonférence extérieure du couvercle (5), de manière à ce que, un moment de rappel maximum et une tension de traction maximale des deux ressorts individuels (16) soient appliqués dans la section transversale la plus éloignée entre les points d'attache intérieurs (V1, V2) et les points d'attache extérieurs (V3, V4) lors de la rotation de l'arbre à cames pour rappeler le déphaseur.

2. Dispositif selon la revendication 1, **caractérisé en ce que** le couvercle (5) comporte une ouverture (7) centrale avec des évidements (8, 9) diamétralement opposés pour la mise en tension des ressorts individuels en oméga (16).

3. Dispositif selon les revendications 1 et 2, **caractérisé en ce que** les ressorts individuels en oméga (16) sont placés dans le point d'attache (V1, V2) sur l'arbre à cames (1) avec leurs extrémités réalisées longues (17) et dans le point d'attache (V3, V4) du couvercle (5) avec leurs autres extrémités, courtes (19), les ressorts individuels (16) s'entourant partiellement.

4. Dispositif selon la revendication 3, **caractérisé en ce que** les ressorts en oméga (16) sont formés de manière à ce que l'extrémité longue (17) se poursuive par une section (18) pliée à peu près dans la direction radiale de l'évidement (8, 9) sans courbure brusque, qui introduit les forces produites par le couple de rotation de l'arbre à cames (1) dans les ressorts individuels en oméga (16)dans la direction de l'axe de fil (FA).

5. Dispositif selon les revendications 1 à 4, **caractérisé en ce que** les ressorts individuels en oméga (16) de la paire de ressorts (20) sont de construction identique.

6. Dispositif selon les revendications 1 à 5, **caractérisé en ce que** les ressorts individuels oméga (16) sont en acier à ressorts à section transversale ronde ou en fil d'acier à ressorts quadrangulaire à arêtes arrondies, ou ont un profil en U.

7. Dispositif selon la revendication 6, **caractérisé en ce que** les ressorts individuels en oméga (16) ont un diamètre constant ou variable sur leur longueur.
